# EUROPÄISCHE PATENTSCHRIFT

(11) **EP 1 747 122 B1**
(45) Veröffentlichungstag und Bekanntmachung des Hinweises auf die Patenterteilung: **06.08.2008**
(21) Anmeldenummer: 05743107.4
(22) Anmeldetag: 11.05.2005
(51) Int. Cl.: B60R 21/01

(54) **RÜCKHALTESYSTEM**
RESTRAINING SYSTEM
SYSTEME DE RETENUE DES OCCUPANTS

(30) Priorität: 14.05.2004 DE 102004023973
(43) Veröffentlichungstag der Anmeldung: 31.01.2007
(73) Patentinhaber: Bayerische Motorenwerke Aktiengesellschaft, 80809 München (DE)
(72) Erfinder: BAUR, Richard, 85276 Pfaffenhofen (DE); RAUH, Helmut, 81543 München (DE); ACHATZ, Klaus, 82205 Gilching (DE); WEIDNER, Marcus, 82362 Weilheim (DE)
(86) Internationale Anmeldenummer: PCT/EP2005/005096
(87) Internationale Veröffentlichungsnummer: WO 2005/110817

(56) Entgegenhaltungen:
- EP-A- 1 201 512
- US-A- 5 411 289
- US-A- 5 957 490
- US-A1- 2002 056 975
- US-B1- 6 288 636
- US-B1- 6 295 494
- US-B1- 6 314 889
- US-B1- 6 536 798

## Beschreibung

Die Erfindung betrifft ein Rückhaltesystem gemäß dem Oberbegriff des Anspruchs 1.

Derartige Rückhaltesysteme (die beispielsweise als Airbagsystem oder Sicherheitsgurtsystem mit Gurtstraffer oder dergleichen bekannt sind) zum Schutz der Insassen eines Kraftfahrzeugs bei Unfällen sind mittlerweile bereits in viele Fahrzeugen zum Standard geworden. Üblicherweise wird mittels am Fahrzeug angeordneter Beschleunigungssensoren erfasst, ob eine als Aufprall auf ein Hindernis zu interpretierende abrupte Verzögerung des Fahrzeugs auftritt. Im gegebenen Fall wird beispielsweise ein zusammengefalteter Airbag durch Aktivierung beziehungsweise Zündung einer Zündeinheit innerhalb von Sekundenbruchteilen mit Gas befüllt, um den Körper eines Insassen aufzufangen und den Kontakt zu härteren Fahrzeugteilen zu vermeiden.

Verbesserte Systeme sind in der Lage, den Airbag in Abhängigkeit von personenspezifischen und/oder unfallspezifischen Größen stufenweise zu befüllen. Auf diese Weise wird erreicht, dass der Airbag an die Situation (Kind oder Erwachsener bzw. schwerer oder leichter Unfall) angepasst aufgeblasen wird und unnötige leichtere Verletzungen durch ein zu starkes und zu schnelles Befüllen des Airbags vermieden werden. Ein derartiges System ist bereits in der DE 101 02 646 A1 beschrieben.

Ein weiteres Rückhaltesystem ist aus der US 6288 6368 gemäß den Oberbegriff des Anspruchs 1 bekannt.

Der Erfindung liegt die Aufgabe zugrunde, ein Rückhaltesystem für ein Fahrzeug zu schaffen, welches einen verbesserten Insassenschutz gewährleistet.

Erfindungsgemäß wird die Aufgabe durch die Gesamtheit der Merkmale des Anspruchs 1 gelöst. Durch den Aufbau des erfindungsgemäßen Rückhaltesystems, bei dem jeder stufenweise zu aktivierenden Rückhaltevorrichtung zur Aktivierung ihrer verschiedenen Stufen jeweils mindestens zwei unterschiedliche Zündeinheiten zugeordnet sind wird gewährleistet, dass bei Ausfall einer Zündeinheit die bzw. jede zu aktivierende Rückhaltevorrichtung zumindest durch eine andere Zündeinheit über mindestens eine einzige Stufe zumindest zum Teil aktiviert wird.

In einer bevorzugten Ausführungsform der Erfindung weist jede Zündeinheit eine Mehrzahl von Zündendstufen auf, wobei die einzelnen Zündendstufen jeder Zündeinheit unterschiedlichen Rückhaltevorrichtungen (insbesondere gleichen Typs - z.B. nur Airbags oder nur Sicherheitsgurtsysteme) zugeordnet sind. In einer besonders bevorzugten Ausführungsform bezieht sich die Erfindung auf Rückhaltesysteme in Form von Airbagsystemen. Alternativ oder zusätzlich sind aber auch andere Rückhaltesysteme wie beispielsweise ein Sicherheitsgurtsystem mit Gurtstraffer vorgesehen.

Im Folgenden wird die Erfindung anhand von Figuren näher erläutert. Es zeigen:
- Figur 1:: ein Rückhaltesystem gemäß dem Stand der Technik in einer schematischen Darstellung;
- Figur 2:: ein Rückhaltesystem gemäß der Erfindung in einer schematischen Darstellung.

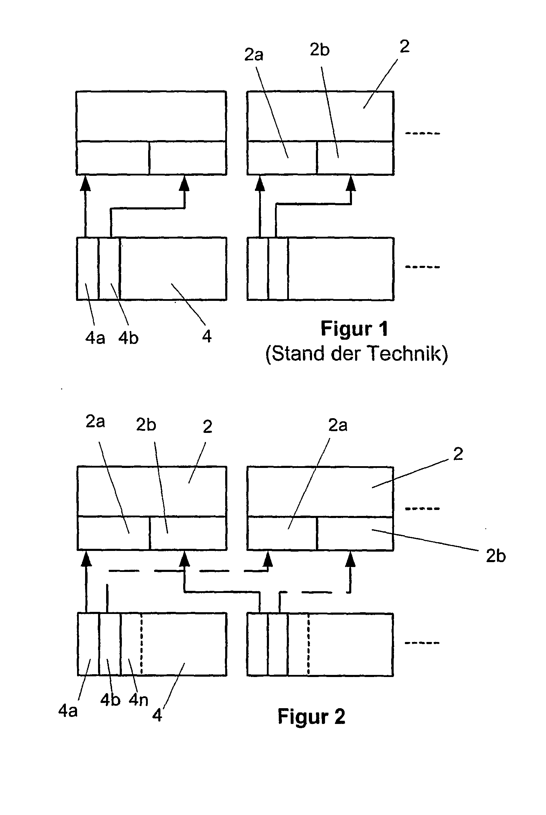

Nachstehend wird die Erfindung am Beispiel eines Airbagsystems erläutert. Nach Figur 1 umfasst ein Rückhaltesystem gemäß dem Stand der Technik eine Mehrzahl von Airbags 2 mit zugeordneten insbesondere pyrotechnischen Auslöseeinheiten 2a, 2b. Eine mögliche Ausführung der Auslöseeinheiten 2a, 2b wird in der eingangs zitierten DE 101 02 646 A1 beschrieben, auf die hier vollumfänglich Bezug genommen wird. Die Airbags 2 sind stufenweise aktivierbar, so dass beispielsweise in einer ersten Stufe der Airbag 2 mit einer bestimmten ersten Füllmenge (z.B. 50% oder 70%) befüllt wird und in einer hiervon unabhängig aktivierbaren zweiten Stufe mit einer definierten zweiten Füllmenge (z.B. 50% oder 30%) weiter befüllt wird. Hierfür weist jeder Airbag 2 mindestens zwei Auslöseeinheiten 2a, 2b auf. Jedem Airbag 2 ist eine als ASIC (anwenderspezifischer integrierter Schaltkreis) ausgebildete Zündeinheit 4 mit einer Mehrzahl von Zündendstufen 4a, 4b zugeordnet, wobei die unterschiedlichen Auslöseeinheiten 2a, 2b eines Airbags 2 von den verschiedenen Zündendstufen 4a, 4b einer einzigen Zündeinheit 4 angesteuert und aktiviert werden. Ferner ist ein Steuergerät 6 vorhanden, welches aktivierungsrelevante Fahrzeug-, Personen- und/oder Betriebsdaten verarbeitet und bei Vorliegen bestimmter Aktivierungs- bzw. Auslösekriterien ein entsprechendes Auslösesignal an die Zündeinheiten 4 zur Aktivierung der Airbags 2 generiert.

Nachteilig ist, dass bei einem Ausfall eines (Zünd-)ASIC kein diesem ASIC bzw. dieser Zündeinheit 4 zugeordneter Airbag 2 aktivierbar ist.

Figur 2 zeigt das erfindungsgemäße Rückhaltesystem in einer möglichen Ausführungsform. Beispielhaft sind zwei als Airbag ausgebildete Rückhaltevorrichtungen 2 mit zugeordneten bzw. integrierten Auslöseeinheiten 2a, 2b vorhanden. Jedem Airbag 2 sind zumindest zwei verschiedene Zündeinheiten 4 zugeordnet, so dass bei Ausfall eines ASIC bzw. einer Zündeinheit 4 jeder Airbag 2 zumindest im Rahmen von einer Stufe aktivierbar ist und die Wahrscheinlichkeit für einen Totalausfall eines Airbags 2 deutlich minimiert wird. Im dargestellten Ausführungsbeispiel ist jeder der beiden Auslöseeinheiten 2a; 2b jedes Airbags 2 genau eine Zündendstufe 4a (erste Zündeinheit), 4a (zweite Zündeinheit); 4b (erste Zündeinheit), 4b (zweite Zündeinheit) verschiedener Zündeinheiten 4 zugeordnet. Auch eine drei- oder mehrstufige Ausbildung eines Rückhaltesystems ist denkbar, wobei gemäß der Erfindung jeder Rückhaltevorrichtung 2 mindestens zwei verschiedene Zündeinheiten 4 zugeordnet sind. Eine weiter erhöhte Ausfallsicherheit wird gewährleistet, wenn jeder Auslöseeinheit 2a, 2b,..., 2n eine unterschiedliche Zündeinheit 4 zugeordnet wird.

Die Zündeinheiten 4 werden in herkömmlicher Weise über ein Steuergerät 6 (z.B. ein Aibagsteuergerät) - welches die aktivierungs- bzw. auslöserelevanten Fahrzeug-, Personen- und/oder Betriebsdaten (allgemein als Betriebsdaten bezeichnet) auswertet angesteuert. Bevorzugte auslöserelevante Betriebsdaten sind: Beschleunigungsdaten (Fahrzeugbeschleunigung derart, dass auf einen Unfall geschlossen werden kann?), Gurtschlossdaten (angegurtet oder nicht?), Sitzbelegungserkennungsdaten (Sitz belegt oder nicht?), Gewichtserkennung der Fahrzeuginsassen, oder dergleichen. Die Vielzahl auslöserelevanter Daten wird über eine weitverzweigte Sensorik 8 im Fahrzeug erfasst und dem Steuergerät 6 zur weiteren Verarbeitung zugeführt.

Alle hier anhand eines Airbagsystems beschriebenen Merkmale sind selbstverständlich ebenso auf andere Rückhaltesysteme wie beispielsweise das erwähnte Sicherheitsgurtsystem mit Gurtstraffer anwendbar.

## Patentansprüche

1. Rückhaltesystem, insbesondere für ein Kraftfahrzeug, umfassend
- eine in zumindest in zwei Stufen zu aktivierende Rückhaltevorrichtung (2),
- eine Sensorik (8) zur Erfassung aktivierungsrelevanter Betriebsdaten,
- ein Steuergerät (6) zur Verarbeitung der aktivierungsrelevanten Betriebsdaten,
- eine Zündeinheit (4) zur Ansteuerung von Auslöseeinheiten (2a, 2b) zur Aktivierung der mindestens einen Rückhaltevorrichtung (2),
**dadurch gekennzeichnet, dass**
- zumindest zwei schaltungstechnisch unabhängig arbeitende Zündeinheiten (4) vorhanden sind derart, dass bei Ausfall einer Zündeinheit (4) über die andere Zündeinheit (4) die Aktivierung der Rückhaltevorrichtung (2) in zumindest einer Stufe gewährleistet ist.

2. Rückhaltesystem nach Anspruch 1,
**dadurch gekennzeichnet, dass** jede Zündeinheit (4) eine Mehrzahl von Zündendstufen (4a, 4b) umfasst und die einzelnen Zündendstufen (4a, 4b) jeder Zündeinheit (4) unterschiedlichen Rückhaltevorrichtungen (2) zugeordnet sind.

3. Rückhaltesystem nach einem der vorherigen Ansprüche,
**dadurch gekennzeichnet, dass** zumindest eine Rückhaltevorrichtung (2) als Airbag ausgebildet ist.

4. Rückhaltesystem nach einem der vorherigen Ansprüche,
**dadurch gekennzeichnet, dass** zumindest zwei als Airbag ausgebildete Rückhaltevorrichtungen (2) und zumindest zwei Zündeinheiten (4) mit jeweils zumindest zwei Zündendstufen (4a, 4b) vorhanden sind, die derart verschaltet sind, dass die zumindest zwei Zündendstufen (4a, 4b) einer Zündeinheit (4) verschiedenen Airbags zugeordnet sind.

5. Rückhaltesystem nach einem der vorherigen Ansprüche,
**dadurch gekennzeichnet, dass** zumindest eine Rückhaltevorrichtung (2) als Sicherheitsgurt mit Gurtstraffer ausgebildet ist.

6. Rückhaltesystem nach Anspruch 5,
**dadurch gekennzeichnet, dass** zumindest zwei als Sicherheitsgurt mit Gurtstraffer ausgebildete Rückhaltevorrichtungen (2) und zumindest zwei Zündeinheiten (4) mit jeweils zumindest zwei Zündendstufen (4a, 4b) vorhanden sind, die derart verschaltet sind, dass die zumindest zwei Zündendstufen (4a, 4b) einer Zündeinheit (4) verschiedenen Sicherheitsgurten mit Gurtstraffer zugeordnet sind.

## Claims

1. A restraining system, more especially for a motor vehicle, comprising
- a restraining device (2) to be activated in at least two stages,
- a sensor system (8) for detecting activation-relevant operating data,
- a control apparatus (6) for processing the activation-relevant operating data,
- an ignition unit (4) for activating triggering units (2a, 2b) for activating the at least one restraining device (2),
**characterised in that**
- at least two independently wired ignition units (4) are present in such a way that if one ignition unit (4) fails, the activation of the restraining device (2) is ensured in at least one stage by means of the other ignition unit (4).

2. A restraining system according to claim 1, **characterised in that** each ignition unit (4) comprises a plurality of ignition end stages (4a, 4b) and the individual ignition end stages (4a, 4b) of each ignition unit (4) are associated with different restraining devices (2).

3. A restraining system according to any one of the preceding claims, **characterised in that** at least one restraining device (2) is configured as an airbag.

4. A restraining system according to any one of the preceding claims, **characterised in that** at least two restraining devices (2) configured as an airbag and at least two ignition units (4) each with at least two ignition end stages (4a, 4b) are present, which are connected up in such a way that the at least two ignition end stages (4a, 4b) of an ignition unit (4) are associated with different airbags.

5. A restraining system according to any one of the preceding claims, **characterised in that** at least one restraining device (2) is configured as a safety belt with a belt tensioner.

6. A restraining system according to claim 5, **characterised in that** at least two restraining devices (2) configured as a safety belt with a belt tensioner and at least two ignition units (4) each with at least two ignition end stages (4a, 4b) are present, which are connected up in such a way that the at least two ignition end stages (4a, 4b) of an ignition unit (4) are associated with different safety belts with a belt tensioner.

## Revendications

1. Système de retenue, notamment pour un véhicule automobile, comprenant :
- un dispositif de retenue (2) activé au moins selon deux niveaux,
- un ensemble de capteurs (8) pour saisir des données de fonctionnement relatives à l'activation,
- un appareil de commande (6) pour traiter les données de fonctionnement relatives à l'activation,
- une unité d'allumage (4) pour commander des unités de déclenchement (2a, 2b) pour activer au moins un dispositif de retenue (2),
**caractérisé en ce qu'**
il comporte au moins deux unités d'allumage (4) fonctionnant indépendamment l'une de l'autre en technique de commutation de façon qu'en cas de défaillance d'une unité d'allumage (4), l'autre unité d'allumage (4) assure l'activation du dispositif de retenue (2) selon au moins un niveau.

2. Système de retenue selon la revendication 1,
**caractérisé en ce que**
chaque unité d'allumage (4) comporte plusieurs étages de puissance d'allumage (4a, 4b) et les différents étages de puissance d'allumage (4a, 4b) de chaque unité d'allumage (4) sont associés à des dispositifs de retenue (2), différents.

3. Système de retenue selon l'une des revendications précédentes,
**caractérisé en ce qu'**
au moins un dispositif de retenue (2) est réalisé sous la forme d'un coussin gonflable.

4. Système de retenue selon l'une des revendications précédentes,
**caractérisé par**
au moins deux dispositifs de retenue (2) en forme de coussins gonflables et au moins deux unités d'allumage (4) avec chaque fois au moins deux étages de puissance d'allumage (4a, 4b) branchés de façon qu'au moins les deux étages de puissance d'allumage (4a, 4b) d'une unité d'allumage (4) soient associés à des coussins gonflables différents.

5. Système de retenue selon l'une des revendications précédentes,
**caractérisé en ce qu'**
au moins un dispositif de retenue (2) est réalisé sous la forme d'une ceinture de sécurité avec un tendeur de ceinture.

6. Système de retenue selon la revendication 5,
**caractérisé en ce qu'**
au moins deux dispositifs de retenue (2) réalisés sous la forme d'une ceinture de sécurité avec un tendeur de ceinture et au moins deux unités d'allumage (4) ayant chacune au moins deux étages de puissance d'allumage (4a, 4b) sont branchés de façon qu'au moins deux étages de puissance d'allumage (4a, 4b) d'une unité d'allumage (4) soient associés à différentes ceintures de sécurité munies d'un tendeur.
